# EUROPEAN PATENT APPLICATION

(11) **EP 2 824 115 A1**
(43) Date of publication of application: **14.01.2015**
(21) Application number: 13757693.0
(22) Date of filing: 07.03.2013
(51) Int. Cl.: C08B 15/00, C08L 1/26, C08L 55/02, C08L 77/00, C08L 101/00

(54) **MODIFIED CELLULOSE NANOFIBER AND RESIN COMPOSITION INCLUDING MODIFIED CELLULOSE NANOFIBER**

(30) Priority: 08.03.2012 JP 2012051338
(71) Applicant: DIC Corporation, Tokyo 174-8520 (JP); Kyoto University, Sakyo-ku Kyoto-shi Kyoto 606-8501 (JP)
(72) Inventor: SEMBA, Takeshi, Kyoto-shi Kyoto 600-8815 (JP); ITO, Akihiro, Kyoto-shi Kyoto 600-8815 (JP); UESAKA, Takahiro, Kyoto-shi Kyoto 600-8815 (JP); KITAGAWA, Kazuo, Kyoto-shi Kyoto 600-8815 (JP); YANO, Hiroyuki, Uji-shi Kyoto 611-0011 (JP); SATO, Akihiro, Uji-shi Kyoto 611-0011 (JP); YOSHIMURA, Tomoaki, Uji-shi Kyoto 611-0011 (JP)
(74) Representative: Vossius & Partner
(86) International application number: PCT/JP2013/056349
(87) International publication number: WO 2013/133385

(57) **Abstract**

The present invention provides a novel cationically modified cellulose nanofiber. More specifically, the present invention provides a cellulose nanofiber that is cationically modified with a cationic polymer compound comprising repeating units derived from diallylamine.

## Description

### Technical Field

The present invention relates to a modified cellulose nanofiber and a resin composition containing modified cellulose nanofiber.

### Background Art

Cellulose fibers are a basic skeleton material of all plants, and more than one trillion tons of cellulose fibers are amassed on the earth. Cellulose fibers are one-fifth as light as steel but are five times stronger than steel and have a linear thermal expansion coefficient as low as 1/50 that of glass. Taking advantage of these properties of cellulose fibers, development has been made in incorporating cellulose fibers as a filler in a matrix such as a resin to obtain a resin composition for imparting mechanical strength while maintaining a low thermal expansion.

Cellulose fibers (or cellulose nanofibers), for example, have been subjected to various chemical treatments in an attempt to modify them.

Patent Literature (PTL) 1 and Patent Literature 2 disclose a method for producing a microstructurally modified cellulose fiber, the method comprising allowing an N-oxyl compound and a reoxidant to act on natural cellulose to introduce carboxyl and aldehyde groups into the hydroxyl groups of the cellulose, and subjecting the cellulose, to which carboxyl and aldehyde groups were introduced, to cationization treatment using an organic onium compound (organic cationic compound) as a cationization agent. This organic onium compound is a low-molecular-weight compound, does not have a reactive site, and adsorbs onto the above cellulose. Forming a composite with a resin material is not considered in PTL 1 or PTL 2.

PTL 3 discloses a cationized cellulose derivative substituted with quaternary ammonium groups. The quaternary-ammonium-group-containing cationization agent is a low-molecular-weight compound. PTL 3 does not disclose cationizing cellulose fiber or cellulose nanofiber, nor does is forming a composite with a resin material considered in PTL 3.

PTL 4 discloses a cellulose microfibril that is cationically modified with a quaternary-ammonium-group-containing compound. This quaternary-ammonium-group-containing cationization agent is a low-molecular-weight compound of a reactive cationic monomer. PTL 4 discloses a technique for achieving easy microfibrillation of a pulp material by adding the above cationization agent to a pulp material and subjecting the resulting mixture to cationization treatment.

### Citation List

### Patent Literature

PTL 1: JP2011-127067
PTL 2: JP2011-47084
PTL 3: JP2002-226501
PTL 4: JP2011-162608

### Summary of Invention

### Technical Problem

An object of the present invention is to provide a cationically modified novel cellulose nanofiber.

### Solution to Problem

As a result of extensive research to achieve the above object, the present inventors found it possible to obtain a novel modified cellulose nanofiber by cationically modifying a cellulose nanofiber with a cationic polymer compound comprising repeating units derived from diallylamine. Based on this finding, the inventors conducted further extensive research and accomplished the present invention.

The present invention provides a modified cellulose nanofiber, a resin composition containing the modified cellulose nanofiber, a method for producing the modified cellulose nanofiber, and a method for producing the resin composition, as shown in the following items.

Item 1. A modified cellulose nanofiber cationically modified with a cationic polymer compound comprising repeating units derived from diallylamine.

Item 2. The modified cellulose nanofiber according to Item 1, wherein the cationic polymer compound comprising repeating units derived from diallylamin is contained in an amount of 1 to 50% by mass in the modified cellulose nanofiber.

Item 3. A resin composition comprising the modified cellulose nanofiber (A) of Item 1 or 2, and a thermoplastic resin (B).

Item 4. The resin composition according to Item 3, wherein the amount of the modified cellulose nanofiber (A) is 1 to 300 parts by mass, per 100 parts by mass of the thermoplastic resin (B).

Item 5. The resin composition according to Item 3 or 4, wherein the thermoplastic resin (B) is a polyamide resin and/or an ABS resin.

Item 6. A method for producing a modified cellulose nanofiber, the method comprising cationically modifying a cellulose nanofiber by reacting a portion of the hydroxyl groups of the cellulose nanofiber with a cationic polymer compound comprising repeating units derived from diallylamine.

Item 7. A method for producing a resin composition, the method comprising:
(1) a step of cationically modifying a cellulose nanofiber by reacting a portion of the hydroxyl groups of the cellulose nanofiber with a cationic polymer compound comprising repeating units derived from diallylamine; and
(2) a step of mixing the modified cellulose nanofiber (A) obtained in step (1) with a thermoplastic resin (B).

Item 8. The method for producing a resin composition according to Item 7, wherein the thermoplastic resin (B) is a polyamide resin and/or an ABS resin.

### Advantageous Effects of Invention

In the modified cellulose nanofiber of the present invention, hydroxyl group(s) present on the surface are substituted with a cationic polymer compound comprising repeating units derived from diallylamine. This cationic polymer compound is a bulky compound of high molecular weight. Therefore, agglomeration of the modified cellulose nanofiber caused by hydrogen bonding can be inhibited. Further, electrostatic repulsion can be satisfactorily obtained between the modified cellulose nanofibers because the cationic polymer compound comprising repeating units derived from diallylamine is a cationic compound.

When the modified cellulose nanofiber of the present invention is mixed with a resin material, the agglomeration of the modified cellulose nanofiber is inhibited, allowing the modified cellulose nanofiber to be uniformly dispersed in the resin. It is thereby possible to prepare a modified cellulose nanofiber-containing resin composition or molded article having excellent mechanical properties, heat resistance, surface smoothness, appearance, and the like.

In relation to the mechanical properties, the resin composition containing the modified cellulose nanofiber of the present invention can perform well-balanced improvement of static properties such as a flexure test and dynamic properties such as an impact test. In relation to the heat resistance, the resin composition containing the modified cellulose nanofiber of the present invention can achieve improvement of several tens of degrees in heat distortion temperature.

The molded products obtained from the resin composition containing the modified cellulose nanofiber of the present invention do not suffer from agglomeration of the cellulose nanofiber and have excellent surface smoothness and appearance.

The cationic polymer compound comprising repeating units derived from diallylamine used in the preparation of the modified cellulose nanofiber of the present invention is used as a fiber/fabric-related treatment agent and can be easily put into practical use since it is excellent in terms of cost as well as ease of treatment. The cellulose nanofiber modified with the cationic polymer compound comprising repeating units derived from diallylamine of the present invention effectively achieves enhanced dispersibility in the resin component of a resin composition.

With the modified cellulose nanofiber of the present invention, a novel modified cellulose nanofiber can be provided in fields related to papermaking, a novel resin composition containing the modified cellulose nanofiber can be provided in fields related to chemicals, and a novel processed product and assembly product prepared from the resin composition can be provided in the industries related to automobiles.

### Brief Description of Drawings

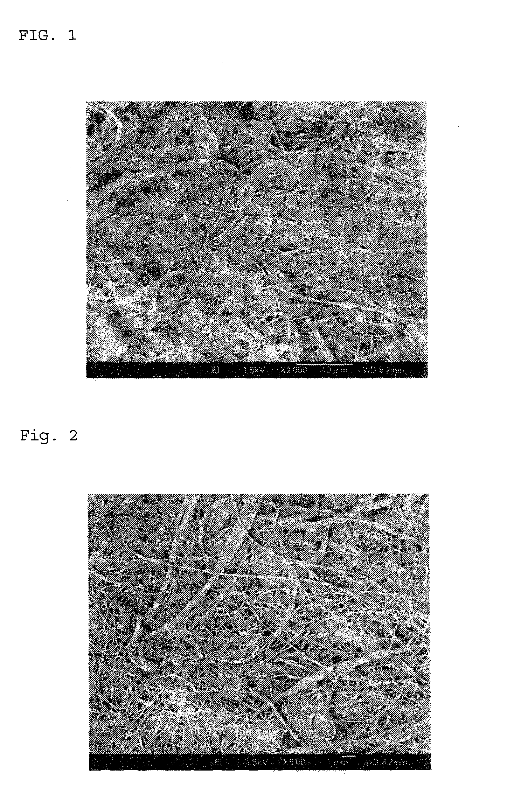

Fig. 1 is a micrograph of the cellulose nanofiber used in the Examples (magnification: 2,000x).
Fig. 2 is a micrograph of the cellulose nanofiber used in the Example (magnification: 5,000x).

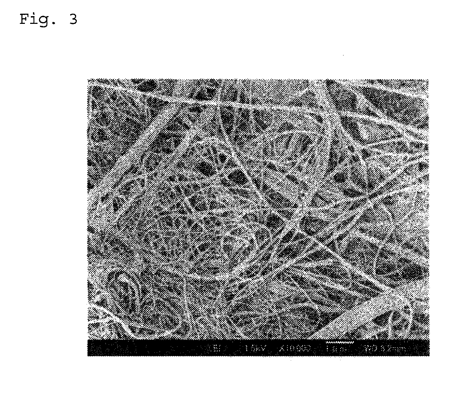

Fig. 3 is a micrograph of the cellulose nanofiber used in the Examples (magnification: 10,000x).

### Description of Embodiments

The following are detailed descriptions of the modified cellulose nanofiber of the present invention, a resin composition containing the modified cellulose nanofiber, a method for producing the modified cellulose nanofiber, and a method for producing the resin composition.

### 1. Modified Cellulose Nanofiber

The modified cellulose nanofiber (A) of the present invention is cationically modified with a cationic polymer compound comprising repeating units derived from diallylamine.

Examples of cellulose nanofibers (CNFs) used as a starting material of the modified cellulose nanofiber (modified CNF) include pulp obtained from a natural plant raw material, such as wood, bamboo, hemp, jute, kenaf, cotton, beat, agricultural waste, cloth, and paper; regenerated cellulose fiber such as rayon and cellophane; and the like. Of these, pulp is a preferable raw material. Examples of wood include, but are not limited to, Sitka spruce, *Cryptomeria japonica, Chamaecyparis obtusa,* eucalyptus, acacia, and the like. Examples of paper include, but are not limited to, deinked recycled waste-paper, cardboard recycled waste-paper, magazines, copy paper, and the like.

Preferable examples of pulp include chemical pulp (kraft pulp (KP) and sulfite pulp (SP)), semi-chemical pulp (SCP), chemiground pulp (CGP), chemi-mechanical pulp (CMP), ground pulp (GP), refiner mechanical pulp (RMP), thermomechanical pulp (TMP), and chemithermomechanical pulp (CTMP), which are obtained by chemically and/or mechanically pulping plant raw materials; and deinked recycled pulp, cardboard recycled pulp, and magazine recycled pulp, which comprise the above pulps as main ingredients. These raw materials may optionally be subjected to delignification or bleaching to control the lignin content in the pulps.

Among these pulps, various kraft pulps derived from softwood with high fiber strength (softwood unbleached kraft pulp (or "NUKP"), oxygen-prebleached softwood kraft pulp (or "NOKP"), and softwood bleached kraft pulp (or "NBKP") are particularly preferably used.

Pulp consists mainly of cellulose, hemicellulose, and lignin. The lignin content of pulp is not particularly limited, and is generally about 0 to 40 wt%, and preferably about 0 to 10 wt%. The lignin content can be measured by using the Klason method.

In plant cell walls, a cellulose microfibril (single cellulose nanofiber) having a width of about 4 nm is present as the minimum unit. This is a basic skeleton material (basic element) of plants, and the assembly of these cellulose microfibrils forms a plant skeleton. In the present invention, the cellulose nanofiber is obtained by breaking apart the fibers of a plant-fiber-containing material (e.g., wood pulp) to a nanosize level.

A known method may be used as a method to produce cellulose nanofibers (a method to defibrate plant fibers). For example, a defibration method can be used in which an aqueous suspension or slurry of a material containing the above plant fiber is mechanically milled or beaten using a refiner, a high-pressure homogenizer, grinder, single-screw or multi-screw extruder (preferably a twin-screw extruder), bead mill, or the like. It is possible to perform treatment by combining these defibration methods, if necessary.

When water is used as a dispersion medium in the defibration step, an amphiphilic solvent may be added as another solvent. Examples include ketone-based solvents, such as acetone and methylethylketone; alcohol-based solvents, such as methanol and ethanol; ester-based solvents, such as ethyl acetate; aprotic solvents, such as n-methyl-2-pyrrolidone (NMP), dimethylformamide (DMF), dimethylacetamide (DMAc); and the like. These solvents may be used singly or in a combination of two or more as a mixed solvent. Of these, acetone, which contributes to easy removal of water from the system and satisfactory dispersion of CNF, is preferable.

As the defibration treatment method described above, for example, the methods disclosed in JP2011-213754 and JP2011-195738 may be used.

The cellulose nanofiber preferably has a specific surface area of about 50 to 300 m²/g, more preferably about 70 to 250 m²/g, and still more preferably about 100 to 200 m²/g. Cellulose nanofiber having a higher specific surface area contributes to improvement in the strength of a resin composition, and is thus preferable. If the specific surface area is too high, agglomeration in resin easily occurs, which may result in a failure to obtain a target material with high strength. It is therefore preferable for the cellulose nanofiber to have a specific surface area within the above range. Cellulose nanofiber having a high specific surface area can be cationically modified with a cationic polymer compound comprising repeating units derived from diallylamine in an efficient manner.

The cellulose nanofiber preferably has an average fiber diameter of about 3 µm or less, and more preferably about 0.01 to 3 µm. It is also possible to use cellulose nanofiber having an average fiber diameter of about 10 to 200 nm, preferably about 10 to 150 nm, and particularly preferably about 10 to 100 nm. The average fiber length of cellulose nanofiber is preferably 5 to 3000 µm. The average value of the fiber diameter of cellulose nanofiber (average fiber diameter) is obtained by measuring at least 50 modified cellulose nanofibers within an electron microscope field of view. Examples of the cellulose nanofiber described above include Celish produced by Daicel Chemical Industries, Ltd. The cellulose nanofiber having the properties described above can be cationically modified with a cationic polymer compound comprising repeating units derived from diallylamine in an efficient manner.

The modified cellulose nanofiber (A) of the present invention, which is cationically modified with a cationic polymer compound comprising repeating units derived from diallylamine, is obtained by substituting a portion of the hydroxyl groups present on the surface of cellulose nanofiber with a cationic polymer compound comprising repeating units derived from diallylamine. This cationic polymer compound is a bulky compound of high molecular weight. Therefore, agglomeration of the modified cellulose nanofiber caused by hydrogen bonding can be inhibited. Further, electrostatic repulsion can be satisfactorily obtained between modified cellulose nanofibers because the cationic polymer compound comprising repeating units derived from diallylamine is a cationic compound. For this reason, when the modified cellulose fiber (A) of the present invention is incorporated into a resin material as a filler, the modified cellulose fiber (A) shows excellent dispersibility in the resin component and can improve the properties of the resin composition, such as mechanical strength.

A preferable embodiment of the cationic polymer compound comprising repeating units derived from diallylamine is a polymer comprising:
diallylamine hydrochloride represented by the following Formula (1) : 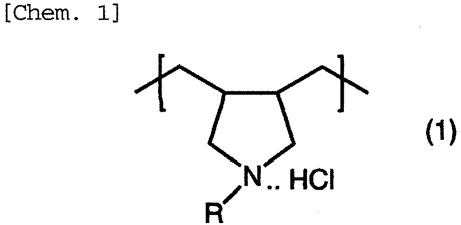 wherein R is a hydrogen atom, a C₁₋₁₀ alkyl group, a C₅₋₁₀ cycloalkyl group, or a C₇₋₁₀ aralkyl group; and epichlorohydrin:

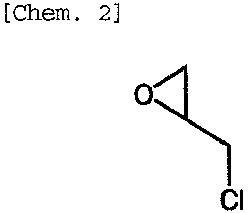

A preferable embodiment of the cationic polymer compound comprising repeating units derived from diallylamine is a polymer represented by the following Formula (2): 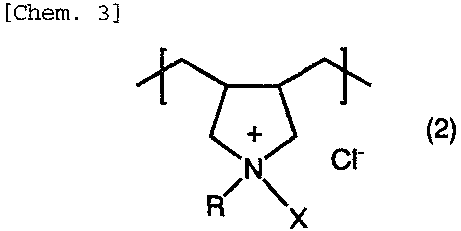 wherein R is a hydrogen atom, a C₁₋₁₀ alkyl group, a C₅₋₁₀ cycloalkyl group, or a C₇₋₁₀ aralkyl group, and X is an epoxy-2,3-propyl group: 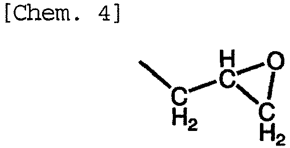 or a 3-chloro-2-hydroxypropyl group:

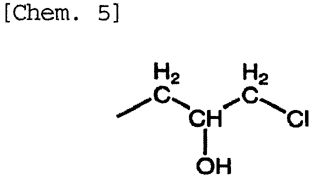

A preferable embodiment of the cationic polymer compound comprising repeating units derived from diallylamine is a compound represented by the following Formula (3): 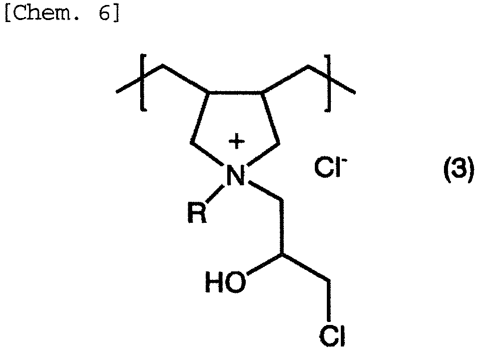 wherein R is a hydrogen atom, a C₁₋₁₀ alkyl group, a C₅₋₁₀ cycloalkyl group, or a C₇₋₁₀ aralkyl group.

In the compounds represented by Formulae (1) to (3), since its synthesis is industrially possible, R is preferably a hydrogen atom, a C₁₋₁₀ alkyl group, a C₅₋₁₀ cycloalkyl group, or a C₇₋₁₀ aralkyl group. Examples of C₇₋₁₀ aralkyl groups include a benzyl group (C₆H₅CH₂-), a phenethyl group (C₆H₅CH₂CH₂-), and the like. A methyl group, which is inexpensively synthesized, is the most preferable.

Each of the compounds represented by Formulae (2) and (3) (the cationic polymer compounds comprising repeating units derived from diallylamine) has a weight average molecular weight (Mw) of preferably about 1,000 to 5,000,000, more preferably about 10,000 to 1,000,000, further preferably about 20,000 to 800,000, and particularly preferably about 25,000 to 600,000, to inhibit agglomeration of modified cellulose nanofiber caused by hydrogen bonding, and to satisfactorily obtain electrostatic repulsion between the modified cellulose nanofibers.

The modified cellulose nanofiber of the present invention is cationically modified preferably by covalent bonds between a portion of the hydroxyl groups of the cellulose nanofiber and the epichlorohydrin moieties of a cationic polymer compound comprising repeating units derived from diallylamine (e.g., the compound represented by Formula (3)). "Covalent bond" refers to a chemical bond that involves the sharing of electron pairs between atoms.

The structure represented by the following Formula (4) shows an example of a structure that is cationically modified by covalent bonds between a portion of the hydroxyl groups of cellulose nanofiber and the epichlorohydrin moieties of a cationic polymer compound comprising repeating units derived from diallylamine. 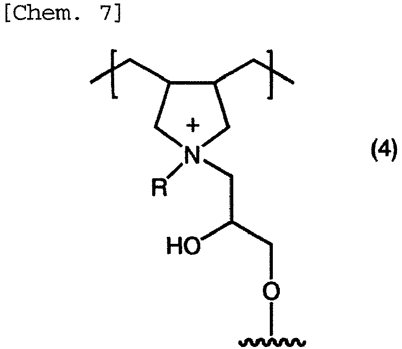 In Formula (4), R is a hydrogen atom, a C₁₋₁₀ alkyl group, a C₅₋₁₀ cycloalkyl group, or a C₇₋₁₀ aralkyl group.

When cellulose nanofiber is cationically modified by covalent bonds between a portion of the hydroxyl groups of the cellulose nanofiber and the epichlorohydrin moieties of a cationic polymer compound comprising repeating units derived from diallylamine (e.g., the compound represented by Formula (3)), an effect of improving the dispersibility in a resin can be obtained.

The modified cellulose nanofiber of the present invention also includes an embodiment in which a portion of the hydroxyl groups of the cellulose nanofiber are ionically adsorbed to a cationic polymer compound comprising repeating units derived from diallylamine.

The modified cellulose nanofiber contains the cationic polymer compound comprising repeating units derived from diallylamine in an amount of preferably about 1 to 50 mass%, more preferably about 1 to 20 mass%, still more preferably about 1.5 to 20 mass%, and particularly preferably about 2 to 10 mass%, to inhibit agglomeration of the modified cellulose nanofiber caused by hydrogen bonding, and to satisfactorily obtain electrostatic repulsion between the modified cellulose nanofibers. "Amount" above refers to the amount of the cationic polymer compound comprising repeating units derived from diallylamine (e.g., the compound represented by Formula (3)), whose epichlorohydrin moieties form covalent bonds with a portion of the hydroxyl groups of the cellulose nanofiber (amount of covalent bonds). The amount may also include the amount of the cationic polymer compound comprising repeating units derived from diallylamine, which are ionically adsorbed to a portion of the hydroxyl groups of the modified cellulose nanofiber (ion adsorption amount).

In the modified cellulose nanofiber of the present invention, hydroxyl group(s) present on the surface are substituted with a cationic polymer compound comprising repeating units derived from diallylamine. This cationic polymer compound is a bulky compound of high molecular weight. Therefore, the agglomeration of the modified cellulose nanofiber caused by hydrogen bonding can be inhibited. Further, electrostatic repulsion can be satisfactorily obtained between the modified cellulose nanofibers because the cationic polymer compound comprising repeating units derived from diallylamine is a cationic compound.

### 2. Method for Producing Modified Cellulose Nanofiber

The method for producing a modified cellulose nanofiber of the present invention comprises cationically modifying cellulose nanofiber by reacting a portion of the hydroxyl groups of the cellulose nanofiber with a cationic polymer compound comprising repeating units derived from diallylamine.

The cellulose fiber and the cationic polymer compound comprising repeating units derived from diallylamine used as starting materials may be those described above in "1. Modified Cellulose Nanofiber." Since cellulose nanofiber can be cationically modified with a cationic polymer compound comprising repeating units derived from diallylamine in an efficient manner, cellulose nanofiber having a large specific surface area is preferable.

In a preferable embodiment, the method for producing a modified cellulose nanofiber of the present invention comprises reacting cellulose nanofiber with a cationic polymer compound comprising repeating units derived from diallylamine. The cationic polymer compound is represented by the following Formula (2) : 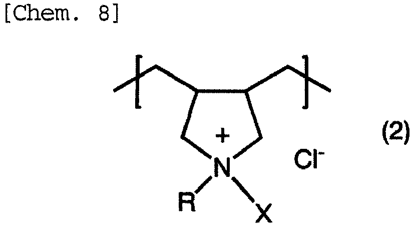 wherein R is a hydrogen atom, a C₁₋₁₀ alkyl group, a C₅₋₁₀ cycloalkyl group, or a C₇₋₁₀ aralkyl group, and X is either an epoxy-2,3-propyl group: 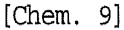 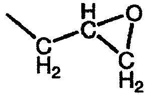 or a 3-chloro-2-hydroxypropyl group: 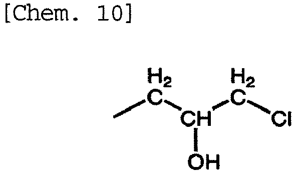 In this manner, a modified cellulose nanofiber represented by, for example, the following Formula (4) is obtained. 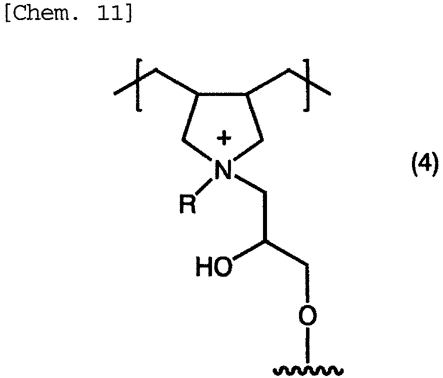 In formula (4), R is a hydrogen atom, a C₁₋₁₀ alkyl group, a C₅₋₁₀ cycloalkyl group, or a C₇₋₁₀ aralkyl group.

A preferable embodiment of the cationic polymer compound comprising repeating units derived from diallylamine represented by Formula (2) is a compound represented by the following Formula (3): 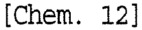 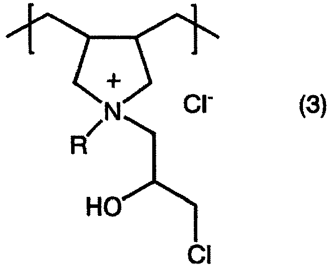 wherein R is a hydrogen atom, a C₁₋₁₀ alkyl group, a C₅₋₁₀ cycloalkyl group, or a C₇₋₁₀ aralkyl group.

In the method for producing a modified cellulose nanofiber of the present invention, cellulose nanofiber is cationically modified preferably in the presence of an alkali by covalent bonds between a portion of the hydroxyl groups of the cellulose nanofiber and the epichlorohydrin moieties of a cationic polymer compound comprising repeating units derived from diallylamine (e.g., the compound represented by Formula (3)). The reaction of the cellulose nanofiber with the cationic polymer compound comprising repeating units derived from diallylamine is preferably undergone in the presence of an alkali such as an alkali metal hydroxide, together with water and/or a C₁₋₄ alcohol.

Preferable examples of the alkali used as a catalyst include alkali metal hydroxides, such as sodium hydroxide, potassium hydroxide, magnesium hydroxide, and calcium hydroxide.

Preferable examples of the water include tap water, purified water, ion exchange water, pure water, industrial water, and the like. Specific preferable examples of the C₁₋₄ alcohol include methanol, ethanol, n-propyl alcohol, isopropyl alcohol, n-butanol, and the like. The water and C₁₋₄ alcohol may be used alone or in a combination of two or more. When water and C₁₋₄ alcohol are used in a combination, the composition ratio is suitably adjusted.

When cellulose nanofiber is reacted with a cationic polymer compound comprising repeating units derived from diallylamine in the presence of an alkali as described above, the cellulose nanofiber can be cationically modified in a satisfactory manner by covalent bonds between a portion of the hydroxyl groups of the cellulose nanofiber and the epichlorohydrin moieties of the cationic polymer compound comprising repeating units derived from diallylamine (e.g., the compound represented by Formula (3)).

The amount of the cationic polymer compound comprising repeating units derived from diallylamine relative to the amount of the cellulose nanofiber may be adjusted so that the modified cellulose nanofiber contains the cationic polymer compound comprising repeating units derived from diallylamine in an amount of about 1 to 50 mass% as described above. The cationic polymer compound comprising repeating units derived from diallylamine may be used in an amount of preferably about 3 to 200 parts by mass, more preferably about 3 to 100 parts by mass, and further preferably about 5 to 45 parts by mass, per 100 parts by mass of the cellulose nanofiber.

The amount of an alkali (e.g., alkali metal hydroxide) may be adjusted so that the modified cellulose nanofiber contains the cationic polymer compound comprising repeating units derived from diallylamine in an amount of about 1 to 50 mass% as described above. An alkali may be used in an amount of preferably about 100 to 500 parts by mass, more preferably about 100 to 300 parts by mass, and further preferably about 100 to 200 parts by mass, per 100 parts by mass of the cellulose nanofiber.

The amount of water and/or C₁₋₄ alcohol is preferably about 3,000 to 50,000 parts by weight, more preferably about 3,000 to 10,000 parts by weight, and further preferably about 5,000 to 10,000 parts by weight, per 100 parts by mass of the cellulose nanofiber.

The cellulose nanofiber and the cationic polymer compound comprising repeating units derived from diallylamine are reacted at a temperature of generally about 10 to 90°C, more preferably about 20 to 80°C, and further preferably about 30 to 60°C. Further, a cellulose fiber-containing material acts on (is reacted with) the cationic polymer compound for generally about 10 minutes to 10 hours, preferably about 30 minutes to 5 hours, and more preferably about 1 to 3 hours. The pressure for performing the reaction is not particularly limited, and the reaction may be performed under atmospheric pressure.

The reaction above allows a portion of the hydroxyl groups of the cellulose nanofiber to form covalent bonds with the epichlorohydrin moieties of a cationic polymer compound comprising repeating units derived from diallylamine (e.g., the compound represented by Formula (3)).

The cationically modified cellulose nanofiber of the present invention may be directly mixed with a resin material. However, the mixing step is preferably performed after alkali metal hydroxide salts and other components remaining in the reaction system are neutralized with a mineral acid, organic acid, or the like after performing the cationic modification. In addition to the neutralization step, washing and purification may also be performed by a known method.

The cationic polymer compound comprising repeating units derived from diallylamine used in the production of the modified cellulose nanofiber of the present invention is used as a fiber/fabric-related treatment agent, and can be easily put into practical use since it is excellent in terms of cost as well as ease of treatment. The cellulose nanofiber modified with the cationic polymer compound comprising repeating units derived from diallylamine of the present invention effectively achieves enhanced dispersibility in the resin component of a resin composition.

### 3. Resin Composition

The resin composition of the present invention comprises a modified cellulose nanofiber (A) and a thermoplastic resin (B).

As the modified cellulose fiber (A), the modified cellulose nanofiber described above in "1. Modified Cellulose Nanofiber" or obtained above in "2. Method for Producing Modified Cellulose Nanofiber" may be used.

Examples of the thermoplastic resin (B) include polyethylene (PE), polypropylene (PP), polyvinyl chloride, polystyrene, polyvinylidene chloride, fluororesin, polymethyl methacrylate, polyamide resin, polyester, polycarbonate, polyphenylene oxide, thermoplastic polyurethane, polyacetal, nylon resin, vinyl ether resin, polysulfone-based resin, triacetylated cellulose, diacetylated cellulose, and like cellulose-based resins. These may be used as a matrix material. These thermoplastic resins may be used singly or in a combination of two or more as a combined resin. Of these thermoplastic resins, preferable are polyolefins, such as polypropylene, polyethylene, polybutene, and polystyrene, since they have a broad track record of use with a wood material, such as wood flour, to form a wood plastic composite.

An ABS resin (acrylonitrile-butadiene-styrene copolymer synthetic resin) is preferable as a matrix material since polyacrylonitrile, which is one of the components of ABS resin, has a compatibility parameter close to that of a cellulose-based material and has excellent compatibility with a cellulose-based material. Polylactic acid (PLA), which has a broad track record of use with a wood material, such as wood flour, to form a wood plastic composite, is preferable as a matrix resin. Polyamide-based resins, which have an amide bond with high polarity in a molecular structure, have high affinity with a cellulose material, and are thus preferable. Examples include polyamide 6 (PA6, ε-caprolactam ring-opening polymer), polyamide 66 (PA66, polyhexamethylene adipamide), polyamide 11 (PA11, polyamide obtained by ring opening polycondensation of undecanelactam), polyamide 12 (PA12, polyamide obtained by ring opening polycondensation of lauryl lactam), and the like; and polyamide copolymer resin, and the like.

Further, polypropylene, polyethylene, polylactic acid and polyamide resin, which have versatility as a structure component are preferable. Among these resins, a polyamide resin and/or an ABS resin are preferable as the thermoplastic resin (B).

The thermoplastic resin (B) has an average particle diameter of preferably about 50 to 500 µm, more preferably about 20 to 100 µm, and further preferably about 1 to 20 µm to reduce the agglomeration of cellulose nanofiber.

The amount of the modified cellulose nanofiber (A) is preferably about 1 to 300 parts by mass, more preferably about 1 to 200 parts by mass, and still more preferably about 1 to 100 parts by mass, per 100 parts by mass of the thermoplastic resin (B), since excellent mechanical properties, heat resistance, surface smoothness, and appearance can be achieved in this amount range.

In addition to the components above, the resin composition may optionally further contain, for example, additives such as compatibilizing agent; surfactant; polysaccharides, such as starch and alginic acid; natural proteins, such as gelatin, hide glue, and casein; inorganic compounds, such as tannin, zeolite, ceramics, and metal powder; colorant; plasticizer; flavor; pigment; flow regulating agent; leveling agent; conducting agent; antistatic agent; ultraviolet absorber; ultraviolet light dispersing agent; deodorant; and the like.

The optional additives may be added to the resin composition to an extent that the effect of the present invention is not impaired. The amount is, for example, preferably about 10 mass% or less, and more preferably about 5 mass% or less.

The resin composition of the present invention contains modified cellulose nanofiber that is cationically modified with a cationic polymer compound comprising repeating units derived from diallylamine; therefore, the agglomeration of the modified cellulose nanofiber caused by hydrogen bonding can be inhibited, and the electrostatic repulsion can be satisfactorily obtained between the modified cellulose nanofibers. For this reason, in the step of mixing the modified cellulose nanofiber with the resin material, agglomeration of the modified cellulose nanofiber is prevented from occurring, allowing the modified cellulose nanofiber to be uniformly dispersed in the resin. Therefore, a resin composition containing the modified cellulose nanofiber can be obtained with excellent mechanical properties, heat resistance, surface smoothness, and appearance. In relation to the mechanical properties, the resin composition containing the modified cellulose nanofiber of the present invention can perform well-balanced improvement of static properties such as a flexure test and dynamic properties such as an impact test. In relation to the heat resistance, the resin composition containing the modified cellulose nanofiber of the present invention can achieve improvement of several tens of degrees in heat distortion temperature.

### 4. Method for Producing Resin Composition

The method for producing a resin composition of the present invention comprises:
(1) a step of cationically modifying cellulose nanofiber by reacting a portion of the hydroxyl groups of the cellulose nanofiber with a cationic polymer compound comprising repeating units derived from diallylamine; and
(2) a step of mixing the modified cellulose nanofiber (A) obtained in step (1) with a thermoplastic resin (B).

Step (1) is as described above in "2. Method for Producing Modified Cellulose Nanofiber." The modified cellulose nanofiber (A) obtained in step (1) is mixed with a thermoplastic resin (B) in step (2). As used herein, this mixing step is also referred to as "forming" or "to form" a composite.

In the method for producing a resin composition of the present invention, step (1) is preferably step (1a) in which cellulose nanofiber is cationically modified in the presence of an alkali by covalent bonds between a portion of the hydroxyl groups of the cellulose nanofiber and the epichlorohydrin moieties of a cationic polymer compound comprising repeating units derived from diallylamine (e.g., the compound represented by Formula (3)). Step (1a) is as described above in "2. Method for Producing Modified Cellulose Nanofiber"

The amount of the modified cellulose nanofiber (A) used in step (2) may be adjusted so that the amount of the modified cellulose nanofiber (A) contained in the resin composition is equal to the amount described above in "3. Resin Composition." The modified cellulose nanofiber (A) may be used in an amount equal to the amount described in "3. Resin Composition."

In step (2), the thermoplastic resin (B) is preferably a polyamide resin and/or an ABS resin.

In step (2), the temperature during the mixing (the temperature for forming a composite) is preferably about 60 to 250°C, more preferably about 80 to 230°C, and further preferably about 120 to 200°C. It is possible to form a composite by uniformly mixing the modified cellulose nanofiber (A) with the thermoplastic resin (B) at a temperature more than a general temperature used during mold processing of a matrix resin material.

In step (2), optional additives may be added. The additives may be those listed above in "3. Resin Composition."

In step (2) of performing the mixing, it is possible to first disperse the modified cellulose nanofiber (A) and the thermoplastic resin (B) in a dispersion medium, followed by mixing, since the modified cellulose nanofiber (A) can thereby be uniformly dispersed in the thermoplastic resin (B). Examples of the dispersion medium include water; halogenated solvents, such as methylene chloride, chloroform, and carbon tetrachloride; ketone-based solvents, such as acetone and methylethylketone (MEK); tetrahydrofuran (THF); ether-based solvents, such as those obtained by dimethylation, diethylation, etc., of alcohols such as ethylene glycol, propylene glycol, and polyethylene glycol; amide-based solvents, such as dimethylformamide, dimethylacetamide, N-methylpyrrolidone; nonpolar solvents, such as hexane, heptane, benzene, and toluene; or mixed solvents thereof. It is preferable to use xylene and tetralin. Xylene, which can disperse the thermoplastic resin (B), such as polyolefin, in a satisfactory manner, is particularly preferable.

The method of mixing the modified cellulose nanofiber (A), the thermoplastic resin (B), and other optional additives is not particularly limited. Examples include a method of mixing or stirring using a mixer, blender, single-screw extruder, twin-screw extruder, kneader, Laboplastomil, homogenizer, high-speed homogenizer, high-pressure homogenizer, planetary mixer, threeroll mill, or another device capable of mixing and stirring.

The resin composition of the present invention is formed into a desired shape to be used as a molding material.

In the step of mixing the modified cellulose nanofiber with the resin material, the agglomeration of the modified cellulose nanofiber does not occur, allowing the modified cellulose nanofiber to be uniformly dispersed in the resin. Thus, a modified cellulose nanofiber-containing resin composition and molded article having excellent mechanical properties, heat resistance, surface smoothness, appearance, and the like, can be obtained. In terms of the mechanical properties, the resin composition can perform well-balanced improvement of static properties such as a flexure test and dynamic properties such as an impact test. In terms of the heat resistance, the resin composition can achieve improvement of several tens of degrees in heat distortion temperature. Further, a final molded product obtained from the resin composition does not suffer from the agglomeration of cellulose nanofiber and has excellent surface smoothness and appearance.

### 5. Molding Material and Molded Article

The present invention also relates to a molding material using the resin composition.

The resin composition can be formed into a desired shape to be used as a molding material. The molding material may be formed into, for example, a sheet, pellet, powder, or the like. The molding material in the above shape may be obtained, for example, by metal molding, injection molding, extrusion molding, blow molding, or foam molding.

The present invention also relates to a molded article obtained by molding the molding material. The molding conditions of a resin may be suitably adjusted to perform the molding.

The molded article of the present invention can be used not only in the fields of fiber reinforced plastics in which a cellulose nanofiber-containing resin molded product is used, but also in fields that require higher mechanical strength (tensile strength, etc.). For example, the molded article of the present invention can be effectively applied to interior materials, exterior materials, and structural materials of transportation vehicles such as automobiles, trains, ships, and airplanes; the housings, structural materials, and internal parts of electrical appliances such as personal computers, televisions, telephones, and watches; the housings, structural materials, and internal parts of mobile communication devices such as mobile phones; the housings, structural materials, and internal parts of devices such as portable music players, video players, printers, copiers, and sporting equipment; building materials; office supplies such as writing supplies; vessels, containers; and the like.

The final molded products obtained from the resin composition containing the modified cellulose nanofiber of the present invention do not suffer from agglomeration of the cellulose nanofiber and have excellent surface smoothness and appearance.

With the modified cellulose nanofiber of the present invention, a novel modified cellulose nanofiber can be provided in fields related to papermaking, a novel resin composition containing the modified cellulose nanofiber can be provided in fields related to chemicals, and a novel molded processed product and assembly product prepared from the resin composition can be provided in the industries related to automobiles.

### [Examples]

The present invention is described below in further detail with reference to Examples and Comparative Examples. However, the scope of the present invention is not limited to these.

### (1) 1. Cationic Modification of CNF with Various Cationic Modification Agents

### Example 1

### 1. Cationic Modification of CNF with Cationic Modification Agent

Cellulose nanofiber (CNF) was cationically modified with cationic modification agents listed in Table 1. Celish (KY100G) produced by Daicel Chemical Industries, Ltd., was used as CNF. Celish is a CNF having an average fiber diameter of 10 nm to 10 µm, an average fiber length of 0.4 to 0.5 mm obtained by vigorously beating and microfabrillating cotton linters etc. (starting materials for the CNF) by the action of high shearing and high impact forces.

**Table 1**

| Abbreviation of treatment agent | Brief description of cationic modification agent | |
|---|---|---|
| KCA treatment | Methyldiallylamine hydrochloride- epichlorohydrin modified polymer | Reactive type: Molecular weight of about 30,000 |
| TND126 treatment | Methyldiallylamine hydrochloride- epichlorohydrin modified polymer | Reactive type: Molecular weight of about 500,000 |
| TND127 treatment | Polyamine- epichlorohydrin modified polymer | Non-reactive type: Molecular weight of about 500,000 |

In Table 1, the term "reactive type" indicates that the cationic modification agent has a reaction site; this agent is a compound capable of forming covalent bonds with the hydroxyl groups of CNF. The term "non-reactive type" indicates that the cationic modification agent does not have a reaction site; this agent is a compound that is not capable of forming covalent bonds with the hydroxyl groups of CNF but ionically adsorbs to CNF.

Next, each cationic modification agent was reacted with or adsorbed to the CNF under conditions in the presence of an alkali. Table 2 shows the treatment scheme when an alkali was used. When cellulose nanofiber is reacted with a methyldiallylamine hydrochloride-epichlorohydrin modified polymer in the presence of an alkali, the cellulose nanofiber can be cationically modified in a satisfactory manner by covalent bonds between a portion of the hydroxyl groups of the cellulose nanofiber and the epichlorohydrin moieties of the methyldiallylamine hydrochloride-epichlorohydrin modified polymer.

**Table 2**

| Procedure | Operation |
|---|---|
| 1 | A cationic modification agent was added to 2 L of distilled water (3 L when in the absence of an alkali) at 40°C, and 600 g of hydrous CNF (solids content: 10 mass%) was added thereto and stirred (1). |
| 2 | 90 g of NaOH was added to 1 L of distilled water to prepare an alkaline liquid at 40°C (2). |
| 3 | The alkaline liquid (2) prepared in procedure 2 was added to (1) prepared in procedure 1, and the resulting mixture was stirred for 60 minutes. |
| 4 | The resulting product was neutralized with hydrochloric acid, followed by washing with water. |

### 2. Amount of Cationized Polymer Fixed to CNF

The nitrogen amount (the N amount) was measured using a total nitrogen analyzer to calculate the amount of the cationic modification agent fixed to the cellulose nanofiber (CNF). Table 3 shows the amount of the agent fixed to CNF.

**Table 3**

| Sample No. | Abbreviation of treatment agent | Alkaline treatment | Amount of cationic modification agent fixed to CNF (mass%) |
|---|---|---|---|
| Tr1 | KCA treatment | Yes | 5.3 |
| Tr2 | TND126 treatment | Yes | 7.7 |
| Tr5 | TND127 treatment | Yes | 1.4 |
| Tr6 | KCA treatment | No | 1.3 |
| Tr7 | TND126 treatment | No | 2.0 |
| Tr10 | TND127 treatment | No | 2.8 |

Sample Nos. Tr6, Tr7, and Tr10 were not treated with an alkali; thus, the numbers of each samples show the amounts of the agents fixed to the CNF by ion adsorption. Sample Nos. Tr1 and Tr2 were subjected to alkaline treatment using the cationic modification agents of the reacted type; therefore, the numbers of each samples show the amounts of the agents fixed to the CNF by ion adsorption and covalent bonds. Sample No. Tr5 was treated using the cationic modification agent of the non-reactive type; thus, the number of Tr5 shows the amount of the agent fixed to the CNF by ionic adsorption. Higher amounts of the cationic modification agents were fixed to the CNF in sample Nos. Tr1 and Tr2, in which the methyldiallylamine hydrochloride-epichlorohydrin modified polymers were used as cationic modification agents.

### 3. Production of Resin Composition

A cellulose nanofiber (CNF) treated with a cationized polymer was used with polyamide 11 (PA11) to form a composite. Table 4 shows the scheme of forming a composite.

**Table 4**

| Procedure | Operation |
|---|---|
| 1 | The cationically modified CNF and PA11 powder were mixed to form a slurry. |
| 2 | The slurry prepared in procedure 1 was poured into a tray and dried to form a sheet, followed by grinding the sheet to a composite powder. |
| 3 | PA 11 pellet were melt-mixed with the composite powder prepared in procedure 2 using a twin-screw extruder. The cylinder temperatures were 170°C, 175°C, 180°C, 180°C, 180°C, 180°C, 190°C, and 190°C from the upper stream. |
| 4 | Injection molding was performed. |

Tables 5 and 6 below show the compositions of the produced composite materials.

The added amount of the untreated CNF or CNF treated with a cationic modification agent was adjusted to 5 mass% (equivalent to 5.6 parts by mass of the modified CNF per 100 parts by mass of the thermoplastic resin) (Table 5) or 10 mass% (equivalent to 11.1 parts by mass of the modified CNF per 100 parts by mass of the thermoplastic resin) (Table 6).

**Table 5**

| Sample No. | Composition |
|---|---|
| Matrix | PA11 pellet/PAll powder |
| | = 79/10 |
| Blank 5 | PA11 pellet/PA11 powder/untreated CNF |
| | = 88.9/11.1/5.6 |
| Pat1 | PA11 pellet/PA11 powder/KCA treated CNF with alkali |
| | = 88.9/11.1/5.6 |
| Pat2 | PA11 pellet/PA11 powder/TND126 treated CNF with alkali |
| | =88.9/11.1/5.6 |

**Table 6**

| Sample No. | Composition |
|---|---|
| Blank 10 | PA11 pellet/PA11 powder/untreated CNF |
| | = 88.9/11.1/11.1 |
| Pat11 | PA11 pellet/PA11 powder/KCA treated CNF with alkali |
| | = 88.9/11.1/11.1 |
| Pat12 | PA11 pellet/PA11 powder/TND126 treated CNF with alkali |
| | = 88.9/11.1/11.1 |
| Pat15 | PA11 pellet/PA11 powder/TND127 treated CNF with alkali |
| | = 88.9/11.1/11.1 |

### 4. Evaluation Method

A flexure test, Izod impact tests, and heat distortion temperature (HDT) tests were performed. Table 7 shows the test conditions.

**Table 7**

| | |
|---|---|
| Flexure test JIS K-7171 | Test rate: 10 mm/min |
| | Span interval: 64 mm |
| | Specimen shape: 10 mm x 80 mm x 4 mm (W x D x T) |
| Izod impact test | 2.75J-N Test |
| | Hammer capacity: 2.7 J |
| JIS K-7110 | Specimen shape: 10 mm x 80 mm x 4 mm (W x D x T) A notched surface is hit to cause crack propagation from the notch. |
| | 5.5J-R Test |
| | Hammer capacity: 5.5 J |
| | Specimen shape: 10 mm x 80 mm x 4 mm (W x D x T) The surface opposite the notched surface is hit to cause crack propagation in the molded article surface. |
| HDT test | Low load |
| JIS K-7191 | Load stress: 0.45 MPa |
| | Specimen shape: 10 mm x 80 mm x 4 mm (W x D x T) |
| | High load |
| | Load stress: 1.8 MPa |
| | Specimen shape: 10 mm x 80 mm x 4 mm (W x D x T) |

### 5. Evaluation Results and Discussion

Table 8 lists the test results (mechanical properties and HDT ("NB" stands for "not broken")).

In the flexure test, when 5 mass% of untreated CNF was added to a matrix, the flexural modulus and strength were improved. Further, a material to which the cationically modified CNF was added showed superior in flexural properties to a material to which an untreated CNF was added (blank 5 sample).

In the Izod impact test, when a cationically modified CNF was added to a matrix, the degree of deterioration in impact resistance was reduced, and the impact resistance was satisfactorily maintained. Compared with the blank 5 sample, Pat1 obtained by using the methyldiallylamine hydrochloride-epichlorohydrin modified polymer showed a high value in 2.75J-N and NB in 5.5J-R.

The HDT test of both 0.45 MPa and 1.8 MPa loaded showed improvement when 5 mass% of the cationically modified CNF was added. Pat1 and Pat2 showed improvement in the HDT test under stresses of 0.45 MPa and 1.8 MPa compared with the blank 5 sample.

Pat11 and Pat12 obtained by adding the cationically modified CNF showed great improvement in the flexural properties (flexure test). Pat11 and Pat12 also showed improvement in impact strength (Izod impact test). In the HDT test under a stress of 1.8 MPa, Pat11 and Pat12 showed great improvement by several tens of degrees.

**Table 8**

| Sample No. | Flexure test (MPa) | | Izod impact test (kJ/m) | | HDT test (°C) | |
|---|---|---|---|---|---|---|
| | Modulus | Strength | 2.75J-N | 5.5J-R | 0.45 MPa | 1.8 MPa |
| Matrix | 1160 | 49.6 | 8.04 | NB | 111.4 | 47.1 |
| Blank 5 | 1390 | 55.1 | 3.33 | 150 | 155.8 | 52.4 |
| Pat1 | 1480 | 58.5 | 4.38 | NB | 158.8 | 54.0 |
| Pat2 | 1500 | 60 | 3.38 | NB | 159.3 | 56.2 |
| Blank 10 | 1890 | 67.4 | 3.88 | 54.8 | 160.4 | 65.9 |
| Pat11 | 1980 | 70.5 | 4.58 | 80.7 | 161.7 | 100.5 |
| Pat12 | 1930 | 69.9 | 4.25 | 79.6 | 162.2 | 97.6 |
| Pat15 | 1780 | 65.8 | 3.62 | 51.1 | 160.3 | 64.7 |

### (2) 2. Cationic modification of CNF Using Various Cationic Modification Agents

### Example 2

A hydrous cellulose nanofiber (CNF) defibrated by using a high-pressure homogenizer was added to distilled water to obtain a solids content of 2 mass%, followed by stirring. Next, a methyldiallylamine hydrochloride-epichlorohydrin modified polymer having a molecular weight of about 30,000 was added thereto in an amount of 5, 10, 30, or 50 parts by mass per 100 parts by mass of the CNF solids, and sodium hydroxide (NaOH) was added thereto in an amount of 150 parts by mass per 100 parts by mass of the CNF, followed by stirring at 40°C for 1 hour. The slurry after the reaction was neutralized with hydrochloric acid and washed with water to obtain a cationically modified cellulose nanofiber (a modified CNF).

The total nitrogen amount in the obtained modified CNF was measured to determine the mass percent of the methyldiallylamine hydrochloride-epichlorohydrin modified polymer in the modified CNF. Table 9 below shows the results.

When the added amount of the methyldiallylamine hydrochloride-epichlorohydrin modified polymer was increased from 5 to 30 mass%, the mass of the methyldiallylamine hydrochloride-epichlorohydrin modified polymer in the modified CNF increased accordingly. When the added amount of the polymer was further increased to 50 mass%, the mass of the methyldiallylamine hydrochloride-epichlorohydrin modified polymer in the modified CNF did not increase and stayed almost the same.

Next, 10 mass% of each of the modified CNFs and 90 mass% of polyamide 11 (PA11, Rilsan BESNO produced by Arkema) as a thermoplastic resin (11.1 parts by mass of the modified CNF per 100 parts by mass of PA11) were formed into a composite at a set temperature of 190°C by using a twin-screw extruder. Each composite material was processed into an injection-molded article by an injection molding machine.

A flexure test, an Izod impact test, and a heat distortion temperature measurement were performed on the resulting molded articles. As the Izod impact test, a 2.75J-N test (a test in which a notched surface is hit to initiate breakage at the notch tip) and a 5.5J-R test (a test in which the surface opposite the notched surface is hit to initiate breakage at the molded article surface) were performed. Table 10 shows the obtained flexural modulus, flexural strength, Izod impact strength, and heat distortion temperature.

The following describes the CNF used and the details of the property evaluation method.

### Cellulose Nanofiber (CNF)

Celish (KY100G) produced by Daicel Chemical Industries, Ltd., was used. Celish is a CNF having an average fiber diameter of 10 nm to 10 µm, an average fiber length of 0.4 to 0.5 mm obtained by vigorously beating and microfabrillating cotton linters etc. (starting materials for the CNF) by the action of high shearing and high impact forces. Celish was used also in other Examples and Comparative Examples.

### Property Evaluation Method

Flexure Test (JIS K-7171): An injection-molded article having a width of 10 mm, a thickness of 4 mm, and a length of 80 mm was subjected to three-point flexure with a span of 64 mm at a flexural rate of 10 mm/min.

Izod Impact Test (JIS K-7110): A 2-mm notch was inserted into the same injection-molded article as subjected to the flexure test. Then, a test in which a notched surface is hit with a 2.75 J hammer (2.75J-N) and a test in which a surface opposite the notched surface is hit with a 5.5 J hammer (5.5J-R) were performed. A crack will propagate from the notch in the former test, whereas a crack will propagate from the molded article surface that has no notch in the latter test. Both are edgewise tests.

Heat Distortion Temperature Test (JIS K-7191): A test sample was immersed in a silicone bath at 30°C. The flexural stress was set to 0.45 MPa in the low-load test and 1.8 MPa in the high-load test, and the temperature was increased at a rate of 120°C/hour. The temperature at which the distortion degree was 0.34 mm was considered to be a heat distortion temperature.

**Table 9**

| Example No. | Amount of methyldiallylamine hydrochloride-epichlorohydrin modified polymer (molecular weight: about 30,000) added per 100 parts by weight of CNF (parts by mass) | Amount of methyldiallylamine hydrochloride-epichlorohydrin modified polymer (mass%) contained in the modified CNF |
|---|---|---|
| 2-1 | 5 | 2.1 |
| 2-2 | 10 | 3.6 |
| 2-3 | 30 | 5.3 |
| 2-4 | 50 | 5.7 |

**Table 10**

| Example No. | Flexure test (MPa) | | Izod impact test (kJ/m) | | HDT test (°C) | |
|---|---|---|---|---|---|---|
| | Modulus | Strength | 2.75J-N | 5.5J-R | 0.45 MPa | 1.8 MPa |
| 2-1 | 2050 | 71.9 | 4.16 | 63.3 | 164 | 109.4 |
| 2-2 | 2020 | 72.4 | 2.48 | 76.4 | 163.3 | 100.2 |
| 2-3 | 1980 | 70.5 | 4.58 | 180.7 | 161.7 | 100.5 |
| 2-4 | 1940 | 68.8 | 3.29 | 95.7 | 161 | 96.2 |

The flexural property was satisfactorily maintained even when the added amount of the methyldiallylamine hydrochloride-epichlorohydrin modified polymer was changed. The Izod impact strength (5.5J-R) improved as the added amount of the methyldiallylamine hydrochloride-epichlorohydrin modified polymer was increased. The heat distortion temperature was satisfactorily maintained even when the added amount of the methyldiallylamine hydrochloride-epichlorohydrin modified polymer was changed.

### Example 3

A hydrous CNF defibrated by using a high-pressure homogenizer was added to distilled water to obtain a solids content of 2 mass%, followed by stirring. Next, a methyldiallylamine hydrochloride-epichlorohydrin modified polymer having a molecular weight of about 500,000 was added thereto in an amount of 5, 10, 30, or 50 parts by mass per 100 parts by mass of the CNF solids, and sodium hydroxide (NaOH) was added thereto in an amount of 150 parts by mass per 100 parts by mass of the CNF, followed by stirring at 40°C for 1 hour. The slurry after the reaction was neutralized with hydrochloric acid and washed with water, thereby obtaining a cationically modified CNF.

The total nitrogen amount in the obtained modified CNF was measured to measure the mass percent of the methyldiallylamine hydrochloride-epichlorohydrin modified polymer in the modified CNF. Table 11 shows the results.

When the added amount of the methyldiallylamine hydrochloride-epichlorohydrin modified polymer was increased from 5 to 30 mass%, the mass of the methyldiallylamine hydrochloride-epichlorohydrin modified polymer in the modified CNF increased. When the added amount of the polymer was further increased to 50 mass%, the mass of the methyldiallylamine hydrochloride-epichlorohydrin modified polymer in the modified CNF did not increase and stayed almost the same.

Next, 10 mass% of each of the modified CNFs and 90 mass% of polyamide 11 (PA11, Rilsan BESNO produced by Arkema) as a thermoplastic resin (11.1 parts by mass of the modified CNF per 100 parts by mass of PA11) were formed into a composite at a set temperature of 190°C by using a twin-screw extruder. Each composite material was molded into an injection-molded article by an injection molding machine.

A flexure test, Izod impact tests (2.75J-N test and 5.5J-R test), and heat distortion temperature measurements were performed on the resulting molded articles. Table 12 shows the obtained flexural modulus, flexural strength, Izod impact strength, and heat distortion temperature.

**Table 11**

| Example No. | Amount of methyldiallylamine hydrochloride-epichlorohydrin modified polymer (molecular weight: about 500,000) added per 100 parts by weight of CNF (parts by mass) | Amount of methyldiallylamine hydrochloride-epichlorohydrin modified polymer (mass%) contained in the modified CNF |
|---|---|---|
| 3-1 | 5 | 2.9 |
| 3-2 | 10 | 5.4 |
| 3-3 | 30 | 7.7 |
| 3-4 | 50 | 7.8 |

**Table 12**

| Example No. | Flexure test (MPa) | | Izod impact test (kJ/m) | | HDT test (°C) | |
|---|---|---|---|---|---|---|
| | Modulus | Strength | 2.75J-N | 5.5J-R | 0.45 MPa | 1.8 MPa |
| 3-1 | 2060 | 72.7 | 4.10 | 67.2 | 164.8 | 105.7 |
| 3-2 | 2030 | 71.6 | 3.18 | 86.6 | 162.4 | 102.7 |
| 3-3 | 1930 | 69.9 | 4.25 | 79.6 | 162.2 | 97.6 |
| 3-4 | 1900 | 68.2 | 2.43 | 95.9 | 164.3 | 97.8 |

The flexural properties were satisfactorily maintained even when the added amount of the methyldiallylamine hydrochloride-epichlorohydrin modified polymer was changed. The Izod impact strength (5.5J-R) improved as the added amount of the methyldiallylamine hydrochloride-epichlorohydrin modified polymer was increased. The heat distortion temperature was satisfactorily maintained even when the added amount of the methyldiallylamine hydrochloride-epichlorohydrin modified polymer was changed.

### Comparative Example 1

10 mass% of a CNF defibrated by using a high-pressure homogenizer and 90 mass% of polyamide 11 (Rilsan BESNO produced by Arkema) as a thermoplastic resin (11.1 parts by mass of the CNF per 100 parts by mass of PA11) were formed into a composite at a set temperature of 190°C by using a twin-screw extruder. The composite material was processed into an injection-molded article by an injection molding machine.

A flexure test, Izod impact tests (2.75J-N test and 5.5J-R test), and heat distortion temperature measurements were performed on the resulting molded article.

The flexural modulus was 1890 MPa, the flexural strength was 67.4 MPa, and the Izod impact strengths were 3.88 kJ/m² (2.75J-N) and 54.8 kJ/m² (5.5J-R). The heat distortion temperatures were 160.4°C under a low load (0.45 MPa) and 65.9°C under a high load (1.8MPa).

### Comparative Example 2

A hydrous CNF defibrated by using a high-pressure homogenizer was added to distilled water to obtain a solids content of 2 mass%, followed by stirring. Next, a polyamine-epichlorohydrin modified polymer (TND127) having a molecular weight of about 500,000 and no reactivity with the hydroxyl groups of CNF: 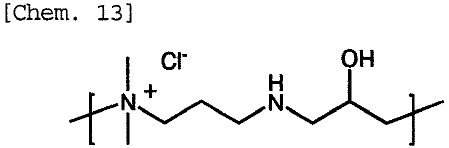 was added in an amount of 30 parts by mass per 100 parts by mass of the CNF solids, and sodium hydroxide (NaOH) was added in an amount of 150 parts by mass per 100 parts by mass of the CNF, followed by stirring at 40°C for 1 hour. The slurry after the reaction was neutralized with hydrochloric acid and washed to obtain a modified CNF.

The total nitrogen amount in the obtained modified CNF was measured to calculate the reaction amount. It was revealed that 1.4 mass% of the polyamine-epichlorohydrin modified polymer was contained in the modified CNF. 10 mass% of this modified CNF and 90 mass% of polyamide 11 (PA11, Rilsan BESNO produced by Arkema) as a thermoplastic resin (11.1 parts by mass of the modified CNF per 100 parts by mass of PA11) were formed into a composite at a set temperature of 190°C by using a twin-screw extruder. The composite material was processed into an injection-molded article by an injection molding machine.

A flexure test, Izod impact tests (2.75J-N test and 5.5J-R test), and heat distortion temperature measurements were performed on the resulting molded article.

The flexural modulus was 1780 MPa, the flexural strength was 65.8 MPa, and the Izod impact strengths were 3.62 kJ/m² (2.75J-N) and 51.1 kJ/m² (5.5J-R). The heat distortion temperatures were 160.3°C under a low load (0.45 MPa) and 64.7°C under a high load (1.8 MPa).

### Reference Example

A hydrous CNF defibrated by using a high-pressure homogenizer was added to distilled water to obtain a solids content of 2 mass%, followed by stirring. Next, glycidyl trimethyl ammonium chloride: 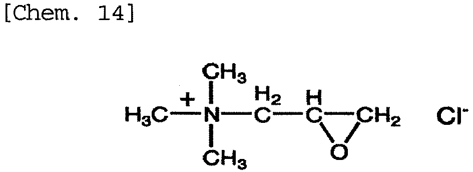 was added in an amount of 300 parts by mass per 100 parts by mass of the CNF solids, and sodium hydroxide (NaOH) was added in an amount of 55 parts by mass per 100 parts by mass of the entire amount of the distilled water, followed by stirring at 80°C for 1 hour. The slurry after the reaction was neutralized with hydrochloric acid and washed to obtain a modified CNF.

10 mass% of this modified CNF and 90 mass% of polyamide 11 (PA11, Rilsan BESNO produced by Arkema) as a thermoplastic resin (11.1 parts by mass of the modified CNF per 100 parts by mass of PA11) were formed into a composite at a set temperature of 190°C by using a twin-screw extruder. The composite material was processed into an injection-molded article by an injection molding machine.

A flexure test, Izod impact tests (2.75J-N test and 5.5J-R test), and heat distortion temperature measurements were performed on the resulting molded article.

The flexural modulus was 1820 MPa, the flexural strength was 66.3 MPa, and the Izod impact strengths were 4.23 kJ/m² (2.75J-N) and 52.3 kJ/m² (5.5J-R). The heat distortion temperatures were 157.4°C under a low load (0.45 MPa) and 62.3°C under a high load (1.8MPa).

### Example 4

A modified CNF was obtained as in Example 1 by adding a methyldiallylamine hydrochloride-epichlorohydrin modified polymer having a molecular weight of about 30,000 in an amount of 5 or 30 parts by mass per 100 parts by mass of the CNF solids, and sodium hydroxide (NaOH) in an amount of 150 parts by mass per 100 parts by mass of the CNF (Table 13). 10 mass% of each of the obtained modified CNFs and 90 mass% of an acrylonitrile-butadiene-styrene copolymer (ABS resin, Kralastic S3716, produced by Nippon A&L) as a thermoplastic resin (11.1 parts by mass of the modified CNF per 100 parts by mass of the ABS resin) were formed into a composite at a set temperature of 190°C by using a twin-screw extruder. Each composite material was processed into an injection-molded article by an injection molding machine.

A flexure test, Izod impact tests (2.75J-N test and 5.5J-R test), and heat distortion temperature measurements were performed on the resulting molded articles. Table 14 shows the obtained flexural modulus, flexural strength, Izod impact strength, and heat distortion temperature.

**Table 13**

| Example No. | Amount of methyldiallylamine hydrochloride-epichlorohydrin modified polymer (molecular weight: about 30,000) added per 100 parts by weight of CNF (parts by mass) | Amount of methyldiallylamine hydrochloride-epichlorohydrin modified polymer (mass%) contained in the modified CNF |
|---|---|---|
| 4-1 | 5 | 2.1 |
| 4-2 | 30 | 5.3 |

**Table 14**

| Example No. | Flexure test (MPa) | | Izod impact test (kJ/m) | | HDT test (°C) | |
|---|---|---|---|---|---|---|
| | Modulus | Strength | 2.75J-N | 5.5J-R | 0.45 MPa | 1.8 MPa |
| 4-1 | 2910 | 81.2 | 2.84 | 12.8 | 108 | 105.5 |
| 4-2 | 2980 | 82.1 | 2.43 | 14.0 | 108.7 | 106.1 |

The flexural properties were satisfactorily maintained even when the added amount of the methyldiallylamine hydrochloride-epichlorohydrin modified polymer was changed. The Izod impact strength (5.5J-R) improved as the added amount of the methyldiallylamine hydrochloride-epichlorohydrin modified polymer was increased. The heat distortion temperature was satisfactorily maintained even when the added amount of the methyldiallylamine hydrochloride-epichlorohydrin modified polymer was changed.

### Comparative Example 3

10 mass% of CNF defibrated using a high-pressure homogenizer and 90 mass% of an ABS resin (Kralastic S3716, produced by Nippon A&L) as a thermoplastic resin (11.1 parts by mass of the CNF per 100 parts by mass of the ABS resin) were formed into a composite at a set temperature of 190°C by using a twin-screw extruder. The composite material was processed into an injection-molded article by an injection molding machine.

A flexure test, Izod impact tests (2.75J-N test and 5.5J-R test), and heat distortion temperature measurements were performed on the resulting molded article.

The flexural modulus was 2690 MPa, the flexural strength was 74.3 MPa, and the Izod impact strengths were 3.24 kJ/m² (2.75J-N) and 12.1 kJ/m² (5.5J-R). The heat distortion temperatures were 107.8°C under a low load (0.45 MPa) and 105.4°C under a high load (1.8 MPa).

### Discussion of the Evaluation Results

Examples 2 and 3 showed excellent properties in terms of flexural modulus, flexural strength, Izod impact strength, and heat distortion temperature. It was confirmed possible to change the flexural property and impact resistance as desired, by changing the amount of addition of the methyldiallylamine hydrochloride-epichlorohydrin modified polymer. The molded article formed only of nylon 11 had a flexural modulus of 1160 MPa, a flexural strength of 49.6 MPa, Izod impact strengths of 8.04 kJ/m² (2.75J-N) and NB (not broken) (5.5KJ-R), and heat distortion temperatures of 111.4°C (low load: 0.45 MPa) and 47.1 °C (high load: 1.8 MPa).

Comparative Example 1 relates to a thermoplastic resin composition reinforced with a CNF that is not cationically modified. The resin composition of Comparative Example 1 was inferior in terms of all the evaluations, compared with the thermoplastic resin compositions of Examples 1 and 2, which were obtained by using the modified CNF.

Comparative Example 2 relates to a thermoplastic resin composition reinforced with a CNF that is treated with a cationized polymer having a molecular weight equivalent to that of the cationized polymer used in Example 3, the cationized polymer having no reactivity to the hydroxyl groups of CNF. The resin composition of Comparative Example 2 had insufficient properties compared with the thermoplastic resin composition of Example 3, which was obtained by using the modified CNF.

The Reference Example relates to a thermoplastic resin composition reinforced with a CNF that is cationically modified by covalent bonds between the hydroxyl groups of CNF and the cationic monomer disclosed in a prior art document, JP2011-162608. This thermoplastic resin composition did not have sufficient properties compared with the thermoplastic resin compositions of Examples 2 and 3, which were obtained by using the modified CNF.

Example 4 relates to a thermoplastic resin composition reinforced with a cationized CNF. This resin composition was obtained by adding a CNF cationized with the methyldiallylamine hydrochloride-epichlorohydrin modified polymer used in Example 2 to ABS. The thermoplastic resin composition of Example 4 showed excellent properties in terms of the flexural modulus and flexural strength. The molded article formed only of an ABS resin had a flexural modulus of 2220 MPa, a flexural strength of 69.4 MPa, Izod impact strengths of 19.1 kJ/m² (2.75J-N) and 118 kJ/m² (5.5KJ-R), and heat distortion temperatures of 101.2°C under a low load (0.45 MPa) and 105.3°C under a high load (1.8 MPa).

Comparative Example 3 relates to an ABS resin composition reinforced with a CNF that is not cationically modified. This resin composition had insufficient flexural modulus and flexural strength compared with the thermoplastic resin composition of Example 4, which was obtained by using the modified CNF.

### Comparative Example 4

A cationically modified pulp was produced by cationically modifying a pulp material as described in the procedures of Example 2.

A methyldiallylamine hydrochloride-epichlorohydrin modified polymer having a molecular weight of about 30,000 was added in an amount of 30 parts by mass per 100 parts by mass of the pulp solids of the cationically modified pulp, and sodium hydroxide (NaOH) was added in an amount of 150 parts by mass per 100 parts by mass of the pulp solids, followed by stirring at 40°C for 1 hour. 10 mass% of the modified pulp and 90 mass% of polyamide 11 (PA11, Rilsan BESNO produced by Arkema) as a thermoplastic resin (11.1 parts by mass of the cationically modified pulp per 100 parts by mass of PA11) were formed into a composite at a set temperature of 190°C by using a twin-screw extruder. The composite material was processed into an injection-molded article by an injection molding machine.

A flexure test, an Izod impact test, and heat distortion temperature measurements were performed on the resulting molded article. As the Izod impact test, a 2.75J-N test (a test in which a notched surface is hit to initiate breakage at the notch tip) and a 5.5J-R test (a test in which the surface opposite the notched surface is hit to initiate breakage at the molded article surface) were performed.

The obtained flexural modulus was 1680 MPa, the flexural strength was 63.4 MPa, and the Izod impact strengths were 4.05 kJ/m² (2.75J-N) and 51.6 kJ/m² (5.5J-R). The heat distortion temperatures were 160.7°C (0.45 MPa) and 56.6°C (1.8 MPa).

The resin composition containing the cationically modified pulp had insufficient flexural properties, Izod impact strengths, and heat distortion temperatures compared with the resin composition containing the cationically modified CNF.

### Comparative Example 5

A cationically modified pulp was produced by cationically modifying a pulp material as described in the procedures of Example 2.

A methyldiallylamine hydrochloride-epichlorohydrin modified polymer having a molecular weight of about 30,000 was added in an amount of 30 parts by mass per 100 parts by mass of the pulp solids in the cationically modified pulp, and sodium hydroxide (NaOH) was added in an amount of 150 parts by mass per 100 parts by mass of the pulp solids, followed by stirring at 40°C for 1 hour. 10 mass% of the modified pulp and 90 mass% of an acrylonitrile-butadiene-styrene copolymer (an ABS resin, Kralastic S3716, produced by Nippon A&L Inc.) as a thermoplastic resin (11.1 parts by mass of the cationically modified pulp per 100 parts by mass of the ABS resin) were formed into a composite at a set temperature of 190°C by using a twin-screw extruder. The composite material was processed into an injection-molded article by an injection molding machine.

A flexure test, an Izod impact test, and heat distortion temperature measurements were performed on the resulting molded article. As the Izod impact test, a 2.75J-N test (a test in which a notch-inserted surface is hit to initiate breakage at the notch tip) and a 5.5J-R test (a test in which the surface opposite the notch-inserted surface is hit to initiate breakage at the molded article surface) were performed.

The obtained flexural modulus was 2790 MPa, and the flexural strength was 79.3 MPa.

The resin composition containing the cationically modified pulp had an insufficient flexural property, compared with the resin composition containing the cationically modified CNF.

## Claims

1. A modified cellulose nanofiber cationically modified with a cationic polymer compound comprising repeating units derived from diallylamine.

2. The modified cellulose nanofiber according to claim 1, wherein the cationic polymer compound comprising repeating units derived from diallylamin is contained in an amount of 1 to 50% by mass in the modified cellulose nanofiber.

3. A resin composition comprising the modified cellulose nanofiber (A) of claim 1 or 2, and a thermoplastic resin (B).

4. The resin composition according to claim 3, wherein the amount of the modified cellulose nanofiber (A) is 1 to 300 parts by mass, per 100 parts by mass of the thermoplastic resin (B).

5. The resin composition according to claim 3 or 4, wherein the thermoplastic resin (B) is a polyamide resin and/or an ABS resin.

6. A method for producing a modified cellulose nanofiber, the method comprising cationically modifying a cellulose nanofiber by reacting a portion of the hydroxyl groups of the cellulose nanofiber with a cationic polymer compound comprising repeating units derived from diallylamine.

7. A method for producing a resin composition, the method comprising:
(1) a step of cationically modifying a cellulose nanofiber by reacting a portion of the hydroxyl groups of the cellulose nanofiber with a cationic polymer compound comprising repeating units derived from diallylamine; and
(2) a step of mixing the modified cellulose nanofiber (A) obtained in step (1) with a thermoplastic resin (B).

8. The method for producing a resin composition according to claim 7, wherein the thermoplastic resin (B) is a polyamide resin and/or an ABS resin.
